# EUROPÄISCHE PATENTSCHRIFT

(11) **EP 1 302 302 B1**
(45) Veröffentlichungstag und Bekanntmachung des Hinweises auf die Patenterteilung: **14.06.2006**
(21) Anmeldenummer: 02022158.6
(22) Anmeldetag: 02.10.2002
(51) Int. Cl.: B29C 65/20

(54) **Schweisseinrichtung**
Welding device
Dispositif de soudage

(30) Priorität: 10.10.2001 DE 20116623 U
(43) Veröffentlichungstag der Anmeldung: 16.04.2003
(73) Patentinhaber: Wegener GmbH, 52074 Aachen (DE)
(72) Erfinder: Gehde, Michael, Dr.-Ing., 52076 Aachen-Walheim (DE)
(74) Vertreter: Paul, Dieter-Alfred

(56) Entgegenhaltungen:
- EP-A- 0 376 586
- DE-U- 20 117 119
- DE-U- 20 118 604
- US-A- 4 867 835
- PATENT ABSTRACTS OF JAPAN vol. 1997, no. 04, 30. April 1997 (1997-04-30) -& JP 08 323864 A (MITSUI PETROCHEM IND LTD;OSAKA GAS CO LTD; ASAHI ENTERP:KK; KOYO GIKEN), 10. Dezember 1996 (1996-12-10)

## Beschreibung

Die Erfindung betrifft eine Schweißeinrichtung zum Verschweißen von Kunststoffwerkstücken, insbesondere von Kunststoffplatten, mit einem Grundrahmen, in oder auf dem nebeneinander zwei Schweißtische angeordnet sind, auf denen die Kunststoffwerkstücke verspannbar sind und die verschieblich gelagert sind, wobei eine Antriebseinrichtung für die Verschiebung der Schweißtische in entgegengesetzten Bewegungsrichtungen vorgesehen ist, die einen Antriebsmotor und einen die Antriebskraft vom Antriebsmotor auf die Schweißtische übertragendes Antriebsgestänge aufweist.

Eine solche Schweißeinrichtung ist beispielsweise in der DE 35 39 842 A1, der EP 0 595 213 B1 und in dem DE-GM 85 31 748 beschrieben. Sie weist einen langgestreckten Grundrahmen auf, auf dessen Oberseite zwei sich in einer Horizontalebene erstreckende Schweißtische nebeneinander angeordnet sind. Auf ihren Oberseiten weisen die Schweißtische im Bereich der jeweils benachbarten Stirnseiten Spannbalken mit einer Vielzahl von über ihre Länge nebeneinander angeordneten, auf den zugehörigen Schweißtisch absenkbaren Spannplatten auf. Mit Hilfe der Spannbalken können auf jedem Schweißtisch jeweils eine Kunststoffplatte verspannt werden.

Die Schweißtische sind auf dem Grundrahmen verschieblich gelagert und können mit Hilfe einer Antriebseinrichtung aufeinander zu oder voneinander weg bewegt werden. Die Antriebseinrichtungen weisen hierzu einen Antriebsmotor und eine die Antriebskraft vom Antriebsmotor auf die Schweißtische übertragenes Antriebsgestänge auf. Das Antriebsgestänge ist so gestaltet, daß sich die Schweißtische im Antriebsfall entgegengesetzt und synchron bewegen.

Im Bereich zwischen den beiden Schweißtischen erstreckt sich ein Heizschwert, das für die Erhitzung der miteinander zu verbindenden Stirnseiten der Kunststoffplatten vorgesehen ist. Das Heizschwert ist vertikal in dem Spalt zwischen den benachbarten Stirnseiten der Schweißtische beweglich. Unterhalb der Heizschwertes ist ein Anschlagbalken vorhanden.

Ein Schweißvorgang mit einer solchen Schweißeinrichtung wird dadurch eingeleitet, daß die Schweißtische gegen den in den Spalt eingefahrenen Anschlagbalken verfahren werden, wobei die Schweißtische jeweils an verbreiterten Abschnitten des Anschlagbalkens zur Anlage kommen. Es werden dann die Kunststoffplatten auf die Schweißtische derart aufgelegt, *daß sie an weniger breiten Abschnitten des Anschlagbalkens zur Anlage kommen. Sie stehen dann jeweils ein Stück über die zugehörige Stirnseite des Schweißtisches über. Nach Verspannen der Kunststoffplatten durch Absenken der Spannplatten am Spannbalken werden die Schweißtische auseinandergefahren, und das Heizschwert wird soweit abgesenkt, daß es in der Bewegungsebene der Kunststoffplatten liegt. Die Schweißtische werden anschließend wieder zueinander bewegt, bis die Kunststoffplatten mit ihren zu verbindenden Stirnseiten an dem Heizschwert zur Anlage kommen. Sie erhitzen sich an dem Heizschwert und werden dann nach Wegfahren des Heizschwertes unter Aufbringung eines Schließdruckes durch die Schweißtische gegeneinander gepreßt. Nach dem Erkalten ist die Verbindung zwischen den Kunststoffplatten fertig.

Als Antriebsmotor dienen parallel zueinander angeordnete Pneumatikzylindereinheiten, die jeweils auf ein Paar von gegenüberliegenden Antriebshebeln wirken, welche synchron, jedoch gegenläufig zueinander bewegbar sind, wobei je ein Antriebshebel mit je einem Schweißtisch verbunden ist. Die Antriebshebel sitzen auf Antriebswellen, die über Zahnräder miteinander in Drehverbindung stehen.

Die bekannten Antriebseinrichtungen sind aufwendig, schwer und teuer und nehmen zudem viel Raum ein. Aufgrund des Spiels der Zahnräder ist die Synchronisierung der Bewegungen der Schweißtische nicht exakt.

In der US-A-4,867,835 ist eine Schweißeinrichtung offenbart, bei der auf einem Grundrahmen zwei Schweißtische angeordnet sind, auf denen Kunststoffwerkstücke verspannbar sind und die verschieblich gelagert sind. Zur Verschiebung der Schweißtische in entgegengesetzten Bewegungsrichtungen ist eine von Hand bedienbare Betätigungskinematik vorgesehen, die eine quer zur Bewegungsrichtung der Schweißtische mittig zu diesen gelagerte Betätigungsscheibe aufweist, an der gegenüberliegend je ein Betätigungsarm angelenkt ist. Die Betätigungsarme erstrecken sich entgegengesetzt und sind mit ihren äußeren Enden an den hinteren Enden der Schweißtische angelenkt. Durch Verdrehen der Betätigungsscheibe werden die Schweißtische jeweils in entgegengesetzte Richtungen bewegt.

Der Erfindung liegt somit die Aufgabe zugrunde, die Antriebseinrichtung bei einer Schweißeinrichtung der eingangs genannten Art so zu gestalten, daß sie möglichst einfach und kostengünstig hergestellt werden kann und trotzdem für eine exakte Bewegung der Schweißtische sorgt.

Diese Aufgabe wird erfindungsgemäß dadurch gelöst, daß das Antriebsgestänge quer zu den Bewegungsrichtungen der Schweißtische beabstandete Doppelarmhebel mit jeweils zwei Hebelarmen aufweist, die jeweils auf einer Drehachse drehbar gelagert sind und mechanisch miteinander in Drehverbindung stehen, wobei die einen Hebelarme mit dem einen Schweißtisch und die anderen Hebelarme mit dem anderen Schweißtisch kinematisch derart verbunden sind, *daß die Schweißtische bei einer Drehbewegung der Doppelarmhebel in einer Drehrichtung aufeinander zu und in der anderen Drehrichtung voneinander weg bewegt werden. Grundgedanke der Erfindung ist es also, mindestens zwei Doppelarmhebel vorzusehen, die mit den Schweißtischen derart kinematisch verbunden sind, daß sie durch Drehbewegung der Doppelarmhebel synchron und entgegengesetzt bewegt werden, wobei die Doppelarmhebel mechanisch miteinander in Drehverbindung stehen. Eine solche Konstruktion kann auf einfache und damit kostengünstige Weise verwirklicht werden und arbeitet gleichwohl außerordentlich exakt.

In Ausbildung der Erfindung ist vorgesehen, daß die Doppelarmhebel quer zu den Bewegungsrichtungen der Schweißtische nebeneinander gelagert sind, und zwar vorzugsweise so, daß die Drehachsen der Doppelarmhebel in einer Ebene liegen, die sich quer zu den Bewegungsrichtungen der Schweißtische erstrecken und möglichst symmetrisch liegt, d.h. in der Ebene des Heizschwertes. Dabei sollten sie in Bezug auf die Bewegungsebene der Schweißtische auf gleicher Höhe liegen, d.h. höhenmäßig nicht zueinander versetzt sein.

In aller Regel reicht es aus, wenn zwei Doppelarmhebel vorhanden sind, insbesondere wenn sie im Bereich der Seitenränder der Schweißtische gelagert sind. Dies schließt nicht aus, daß bei besonders breiten Schweißtischen auch mehr Doppelarmhebel - über deren Breite verteilt - vorhanden sind.

Die Doppelarmhebel sind vorzugsweise symmetrisch ausgebildet, indem sie Anlenkpunkte aufweisen, die in einer Ebene mit der jeweiligen Drehachse liegen, also über die Drehachse gegenüberliegend, und die den gleichen Abstand zur jeweiligen Drehachse haben. Die Verbindung der Hebelarme erfolgt zweckmäßigerweise über jeweils eine Betätigungsstange, d.h. die an einem Hebelarm eines Doppelarmhebels angelenkte Betätigungsstange wird mit dem einen Schweißtisch und die an dem anderen Hebelarm desselben Doppelarmhebels angelenkte Betätigungsstange mit dem anderen Schweißtisch verbunden, wobei es aus Symmetriegründen zweckmäßig ist, daß die Betätigungsstangen gleich lang ausgebildet sind und auch parallel zueinander verlaufen. Eine besonders zweckmäßige Herstellung ergibt sich, wenn jeweils ein Doppelarmhebel und deren kinematische Verbindung mit den Schweißtisch eine Gestängeeinheit bilden, und alle Gestängeeinheiten identisch ausgebildet und identisch oder spiegelbildlich angeordnet sind.

Die Erstreckung der Drehachsen der Doppelarmhebel kann grundsätzlich beliebig sein. Vorteilhafterweise sollten sich die Drehachsen entweder senkrecht zur Bewegungsebene der Schweißtische erstrecken oder parallel und quer zu den Bewegungsrichtungen der Schweißtische und in diesem Falle vorzugsweise koaxial zueinander verlaufen.

Die mechanische Drehverbindung der Doppelarmhebel kann auf verschiedene Weise erfolgen, wobei es Ziel dieser Verbindung sein sollte, daß sie möglichst spielfrei und so stabil ist, daß die Verdrehung der Doppelarmhebel möglichst vollständig winkelsynchron erfolgt. Hierfür ist besonders geeignet ein Koppelgestänge, vorzugsweise in Form eines Parallelogrammgestänges. Dies gilt insbesondere für die Ausführungsform, bei der sich die Drehachsen der Doppelarmhebel senkrecht zur Bewegungsebene der Schweißtische erstrecken, also bei horizontaler Bewegungsebene vertikal. Das Parallelogrammgestänge kann aus zwei Schwenkhebeln an den Drehachsen der Doppelarmhebel und aus zwei die Schwenkhebel verbindenden, vorzugsweise parallelen Koppelstangen bestehen, wobei die Schwenkhebel zweckmäßigerweise zwei Hebelarme aufweisen und die beiden Hebelarme jedes Schwenkhebels im Winkel von 180° zueinander stehen.

Alternativ zu der Drehverbindung mittels Koppelgestänge können die Doppelarmhebel auch über wenigstens eine Drehwelle mechanisch synchronisiert sein. Diese Lösung bietet sich insbesondere dann an, wenn die Drehachsen der Doppelarmhebel parallel zur Bewegungsebene der Schweißtische und vor allem koaxial zueinander verlaufen, so daß die Doppelarmhebel auf einer durchgehenden Drehwelle angeordnet werden können. In diesem Fall sind keine Zahnräder erforderlich. Es ist lediglich darauf zu achten, daß die Drehwelle sehr torsionssteif ist.

Was den Antriebsmotor selbst angeht, ist das erfindungsgemäße Antriebsgestänge nicht kritisch. Im Stand der Technik bieten sich hier insbesondere linear arbeitende Antriebsmotoren an, also eine oder mehrere Hydraulik- oder Pneumatikzylindereinheiten, die an irgendeiner Stelle des Antriebsgestänges angreifen. Sofern die Doppelarmhebel über ein Parallelogrammgestänge gekoppelt sind, ist es besonders vorteilhaft, wenn der Antriebsmotor mit zwei gegenläufig beweglichen Teilen und hier insbesondere mit den Koppelstangen verbunden ist. Auf diese Weise bleibt der Grundrahmen bei Bewegung der Doppelarmhebel und damit der Schweißtische kräftefrei, denn der Antriebsmotor hat mit ihm keine Verbindung.

Damit sich die Schweißtische exakt linear bewegen, sollten sie auf Linearführungselementen beispielsweise mit Kugelumlauf gelagert sein.

In der Zeichnung ist die Erfindung anhand eines schematisch dargestellten Ausführungsbeispiels näher veranschaulicht. Es zeigen:
- Figur 1: eine Draufsicht auf die erfindungsgemäße Schweißeinrichtung;
- Figur 2: eine Seitenansicht der Schweißeinrichtung gemäß Figur 1 und
- Figur 3: eine stirnseitige Ansicht der Schweißeinrichtung gemäß den Figuren 1 und 2.

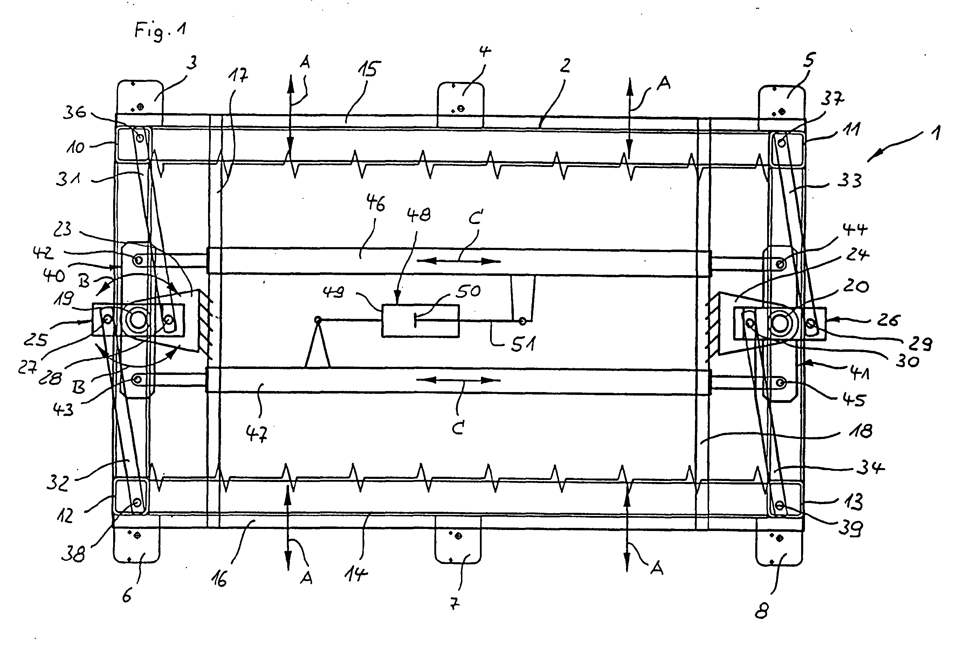

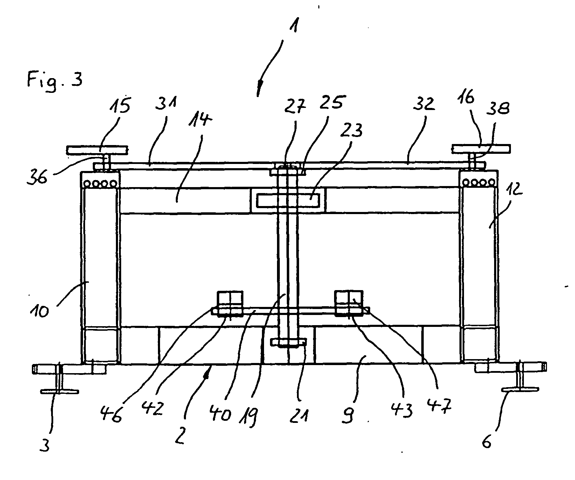

Die in den Figuren dargestellte Schweißeinrichtung 1 hat einen insgesamt mit 2 bezeichneten Grundrahmen 2, der auf sechs Füßen 3 bis 8 ruht. Der Grundrahmen 2 hat ein rechteckiges Untergestell 9 aus Stahlrohren quadratischen Querschnitts, von dem in den Ecken Säulen 10 bis 13 hochstehen, die im Bereich ihrer oberen Enden ein ebenfalls rechteckiges Obergestell 14 tragen. Auf dem Obergestell 14 sind zwei rechteckige Schweißtische 15, 16 angeordnet, die in den Figuren 1 und 3 nur verkürzt dargestellt sind. Die Schweißtische sind auf Linearführungselementen 17, 18 horizontal in Bewegungsrichtungen verschieblich gelagert, die durch die Doppelpfeile A in Figur 1 angezeigt sind. Ihre gegenüberliegenden Stirnseiten liegen entgegen den Darstellung in den Figuren 1 und 3 relativ nah beieinander, so daß zwischen ihnen ein Längsspalt vorhanden ist.

Auf der Oberseite der Schweißtische 15, 16 ist im Bereich ihrer benachbarten Stirnseiten jeweils ein Spannbalken angeordnet, mit dem auf die Schweißtische 15, 16 aufgelegte Kunststoffplatten gegen die Oberseite der Schweißtische 15, 16 verspannt werden können. Die Spannbalken sind - da für die Beschreibung der vorliegenden Erfindung nicht wesentlich - hier der Übersichtigkeit halber weggelassen. Insoweit kann auf den eingangs zitierten Stand der Technik Bezug genommen werden.

Dies gilt auch für die Anordnung eines Heizschwertes in der Mittellängsachse der Schweißeinrichtung 1. Es ist hier ebenfalls der Übersichtlichkeit halber weggelassen.

Zur entgegengesetzten und synchronen Bewegung der beiden Schweißtische 15, 16 in den Richtungen der Pfeile A gemäß Figur 1 ist eine Antriebseinrichtung vorhanden, die erfindungsgemäß wie folgt gestaltet ist.

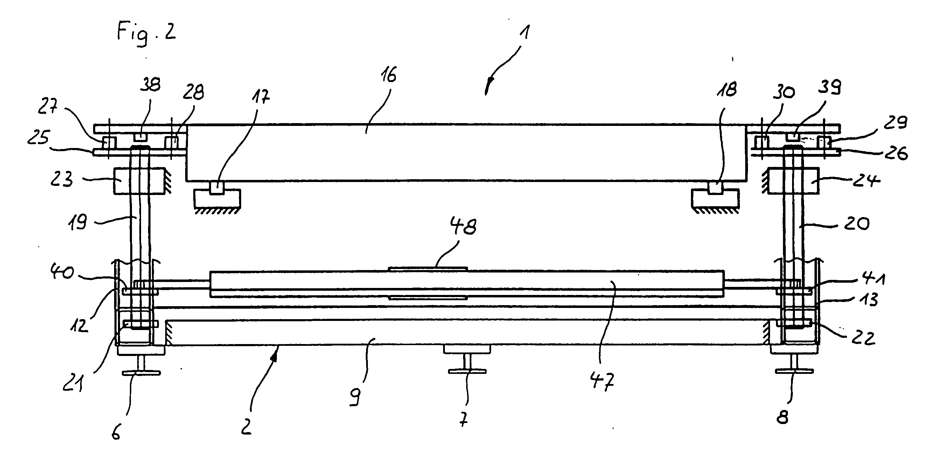

Im Bereich der Stirnseiten des Grundrahmens 2 ist in der Mittellängsachse jeweils eine sich vertikal erstreckende Drehachse 19, 20 angeordnet. Die Drehachsen 19, 20 sind untenseitig über Lager 21, 22 in Untergestell 9 und im oberen Bereich über am Grundrahmen 2 befestigte Lagerbökke 23, 24 drehbar gelagert. An den oberen, freien Enden der Drehachsen 19, 20 ist jeweils ein gerader Doppelarmhebel 25, 26 drehfest mit der jeweils zugehörigen Drehachse 19, 20 verbunden. In den Darstellungen gemäß den Figuren 1 und 2 erstrecken sich die Doppelarmhebel 25, 26 gerade in der Längsachse der Schweißeinrichtung 1.

Jeder Hebelarm des Doppelarmhebels 25, 26 weist einen Anlenkpunkt 27, 28 bzw. 29, 30 auf, an denen jeweils ein Paar von Betätigungsstangen 31, 32 bzw. 33, 34 angreifen.

Die Betätigungsstangen 31, 32, 33, 34 verlaufen horizontal und parallel zueinander, jedoch innerhalb jedes Paares in entgegengesetzte Richtung. Von den von einem Doppelarmhebel 25, 26 ausgehenden Betätigungsstangen 31, 32 bzw. 33, 34 ist die eine Betätigungsstange 31, 33 mit dem einen Schweißtisch 15 über Anlenkpunkte 36, 37 und die andere Betätigungsstange 32, 34 mit dem anderen Schweißtisch 16 über jeweils einen dortigen Anlenkpunkte 38, 39 verbunden. Aufgrund identischer Ausbildung der Doppelarmhebel 25, 26 und der Betätigungsstangen 31, 32, 33, 34 und ihrer Parallelausrichtung werden die Schweißtische 15, 16 bei einer Verdrehung der Doppelarmhebel 25, 26 gleichmäßig und jeweils in entgegengesetzter Richtung (Pfeile B) bewegt. Sie bewegen sich aufeinander zu, wenn die Doppelarmhebel 25, 26 in der Darstellung gemäß Figur 1 im Uhrzeigersinn verdreht werden, und sie bewegen sich voneinander weg, wenn die Doppelarmhebel 25, 26 entgegengesetzt verdreht werden.

Im unteren Bereich sind an den Drehachsen 19, 20 ebenfalls doppelarmige Schwenkhebel 40, 41 drehfest angebracht, die sich quer zu den Doppelarmhebeln 25, 26 erstrecken und in der in Figur 1 gezeigten Stellung parallel zu den Stirnseiten der Schweißeinrichtung 1 verlaufen. Jeder Hebelarm der Schwenkhebel 40, 41 weist jeweils einen Anlenkpunkt 42, 43 bzw. 44, 45 auf. Die sich jeweils in derselben Richtung erstreckenden Hebelarme der Schwenkhebel 40, 41 sind über Koppelstangen 46, 47 miteinander verbunden, wobei die eine Koppelstange 46 an den Anlenkpunkten 42, 44 und die andere Koppelstange 47 an den Anlenkpunkten 43, 45 angreift. Die Koppelstangen 46, 47 und Schwenkhebel 40, 41 stellen ein Parallelogrammgestänge dar. Dieses Parallelogrammgestänge stellt sicher, daß beide Drehachsen 19, 20 eine Drehverbindung dergestalt haben, daß sich die Drehachse 19, 20 und damit die Doppelarmhebel 25, 26 immer in der gleichen Drehrichtung bewegen, wenn die beiden Koppelstangen 46, 47 in zueinander entgegengesetzten Richtungen (Pfeile C) bewegt werden.

Zwischen den beiden Koppelstangen 46, 47 ist ein den Antriebsmotor bildende Pneumatikzylindereinheit 48 angeordnet, die doppelwirkend ausgebildet ist. Die Pneumatikzylindereinheit 48 hat einen Zylinder 49, der mit der in Figur 1 unteren Koppelstange 47 verbunden ist. In dem Zylinder 49 läuft ein Kolben 50, dessen nach außen ragende Kolbenstange 51 mit der in Figur 1 oberen Koppelstange 46 verbunden ist. Der Kolben 50 kann abwechselnd von der einen oder der anderen Seite mit Pneumatikdruck beaufschlagt werden, wodurch eine entsprechende, entgegengesetzte Bewegung der Koppelstangen 46, 47 erzielt wird, die wiederum eine Drehbewegung der Drehachse 19, 20 und damit der Doppelarmhebel 25, 26 zur Folge hat.

## Patentansprüche

1. Schweißeinrichtung (1) zum Verschweißen von Kunststoffwerkstücken mit einem Grundrahmen (2), in oder auf dem nebeneinander zwei Schweißtische (15, 16) angeordnet sind, auf denen die Kunststoffwerkstücke verspannbar sind und die verschieblich gelagert sind, wobei eine Antriebseinrichtung für die Verschiebung der Schweißtische (15, 16) in entgegengesetzten Bewegungsrichtungen vorgesehen ist, die einen Antriebsmotor (48) und ein die Antriebskraft vom Antriebsmotor (48) auf die Schweißtische (15, 16) übertragendes Antriebsgestänge aufweist, **dadurch gekennzeichnet, daß** das Antriebsgestänge quer zu den Bewegungsrichtungen (Pfeile A) der Schweißtische (15, 16) beabstandete Doppelarmhebel (25, 26) mit jeweils zwei Hebelarmen aufweist, die jeweils auf einer Drehachse (19, 20) drehbar gelagert sind und mechanisch miteinander in Drehverbindung stehen, wobei die einen Hebelarme mit dem einen Schweißtisch (15) und die anderen Hebelarme mit dem anderen Schweißtisch (16) kinematisch derart verbunden sind, daß die Schweißtische (15, 16) bei einer Drehbewegung der Doppelarmhebel (25, 26) in der einen Drehrichtung (Pfeil B) aufeinander zu und in der anderen Drehrichtung (Pfeil B) voneinander weg bewegt werden.

2. Schweißeinrichtung nach Anspruch 1, **dadurch gekennzeichnet, daß** die Doppelarmhebel (25, 26) quer zu den Bewegungsrichtungen (Pfeile A) der Schweißtische (15, 16) gelagert sind.

3. Schweißeinrichtung nach Anspruch 2, **dadurch gekennzeichnet, daß** die Drehachsen (19, 20) der Doppelarmhebel (25, 26) in einer Ebene liegen, die sich quer zu den Bewegungsrichtungen (Pfeile A) der Schweißtische (15, 16) erstreckt.

4. Schweißeinrichtung nach einem der Ansprüche 1 bis 3, **dadurch gekennzeichnet, daß** die Doppelarmhebel (25, 26) in Bezug zur Bewegungsebene der Schweißtische (15, 16) auf gleicher Höhe angeordnet sind.

5. Schweißeinrichtung nach einem der Ansprüche 1 bis 4, **dadurch gekennzeichnet, daß** zwei Doppelarmhebel (25, 26) vorhanden sind.

6. Schweißeinrichtung nach Anspruch 5, **dadurch gekennzeichnet, daß** die Doppelarmhebel (25, 26) im Bereich der Seitenränder der Schweißtische (15, 16) gelagert sind.

7. Schweißeinrichtung nach einem der Ansprüche 1 bis 6, **dadurch gekennzeichnet, daß** die Doppelarmhebel (25, 26) Anlenkpunkte (27, 28, 29, 30) aufweisen, die in einer Ebene mit der jeweiligen Drehachse (19, 20) liegen.

8. Schweißeinrichtung nach einem der Ansprüche 1 bis 7, **dadurch gekennzeichnet, daß** die Doppelarmhebel (25, 26) Anlenkpunkte (27, 28, 29, 30) aufweisen, die gleichen Abstand zur jeweiligen Drehachse (19, 20) haben.

9. Schweißeinrichtung nach einem der Ansprüche 1 bis 8, **dadurch gekennzeichnet, daß** die Hebelarme über jeweils eine Betätigungsstange (31, 32, 33, 34) mit einem der Schweißtische (15, 16) verbunden sind.

10. Schweißeinrichtung nach Anspruch 9, **dadurch gekennzeichnet, daß** die Betätigungsstangen (31, 32, 33, 34) gleich lang ausgebildet sind.

11. Schweißeinrichtung nach Anspruch 9 oder 10, **dadurch gekennzeichnet, daß** die an einem Doppelarmhebel (25, 26) angreifenden Betätigungsstangen (31, 32 bzw. 33, 34) parallel zueinander verlaufen.

12. Schweißeinrichtung nach Anspruch 11, **dadurch gekennzeichnet, daß** alle Betätigungsstangen (31, 32, 33, 34) parallel zueinander verlaufen.

13. Schweißeinrichtung nach einem der Ansprüche 1 bis 12, **dadurch gekennzeichnet, daß** jeweils ein Doppelarmhebel (25, 26) und deren kinematische Verbindung mit den Schweißtischen (15, 16) eine Gestängeeinheit bilden und alle Gestängeeinheiten identisch ausgebildet und identisch oder spiegelbildlich angeordnet sind.

14. Schweißeinrichtung nach einem der Ansprüche 1 bis 13, **dadurch gekennzeichnet, daß** die Doppelarmhebel (25, 26) Drehachsen (19, 20) haben, die sich senkrecht zu der Bewegungsebene der Schweißtische (15, 16) erstrecken.

15. Schweißeinrichtung nach einem der Ansprüche 1 bis 13, **dadurch gekennzeichnet, daß** die Doppelarmhebel (25, 26) Drehachsen haben, die parallel oder koaxial zueinander verlaufen.

16. Schweißeinrichtung nach einem der Ansprüche 1 bis 15, **dadurch gekennzeichnet, daß** die Doppelarmhebel (25, 26) über ein Koppelgestänge (40, 41, 46, 47) mechanisch synchronisiert sind.

17. Schweißeinrichtung nach Anspruch 16, **dadurch gekennzeichnet, daß** das Koppelgestänge (40, 41, 46, 47) als Parallelogrammgestänge ausgebildet ist.

18. Schweißeinrichtung nach Anspruch 17, **dadurch gekennzeichnet, daß** das Parallelogrammgestänge aus Schwenkhebeln auf den Drehachsen (19, 20) der Doppelarmhebel (25, 26) und zwei die Schwenkhebel (40, 41) verbindenden Koppelstangen (46, 47) besteht.

19. Schweißeinrichtung nach Anspruch 18, **dadurch gekennzeichnet, daß** die Schwenkhebel (40, 41) zwei Hebelarme aufweisen.

20. Schweißeinrichtung nach Anspruch 19, **dadurch gekennzeichnet, daß** die beiden Hebelarme jedes Schwenkhebels (40, 41) im Winkel von 180° zueinander stehen.

21. Schweißeinrichtung nach einem der Ansprüche 1 bis 20, **dadurch gekennzeichnet, daß** die Doppelarmhebel (25, 26) über wenigstens eine Drehwelle mechanisch synchronisiert sind.

22. Schweißeinrichtung nach Anspruch 21, **dadurch gekennzeichnet, daß** die Doppelarmhebel (25, 26) auf der Drehwelle sitzen.

23. Schweißeinrichtung nach einem der Ansprüche 1 bis 22, **dadurch gekennzeichnet, daß** der Antriebsmotor (48) linear arbeitend ausgebildet ist.

24. Schweißeinrichtung nach Anspruch 23, **dadurch gekennzeichnet, daß** der Antriebsmotor als Hydraulik- oder Pneumatikzylindereinheit (48) ausgebildet ist.

25. Schweißeinrichtung nach wenigstens dem Anspruch 18, **dadurch gekennzeichnet, daß** der Antriebsmotor (48) mit zwei gegenläufig beweglichen Teilen (46, 47) des Koppelgestänges gekoppelt ist.

26. Schweißeinrichtung nach wenigstens den Ansprüchen 18 und 25, **dadurch gekennzeichnet, daß** der Antriebsmotor (48) mit den Koppelstangen (46, 47) verbunden ist.

27. Schweißeinrichtung nach einem der Ansprüche 1 bis 26, **dadurch gekennzeichnet, daß** die Schweißtische (15, 16) auf Linearführungselementen (17, 18) gelagert sind.

## Claims

1. Welding device (1) for welding of plastic workpieces with a base frame (2). In or on which two welding tables (15, 16) are arranged side by side, on which the plastic workpieces may be rigged and which are displaceably supported, a drive mechanism being provided for the displacement of the welding tables (15, 16) In opposite directions of movement which has a drive motor (48) and a drive lever system transmitting the power from the drive motor (48) to the welding tables (15, 16), **characterized in that** the drive lever system has twin-arm levers (25, 26) set at a distance transverse to the directions of movement (arrow A) of the welding tables (15, 16), each with two lever arms which are r o-tatable on a hinge (19, 20) and mechanically connected by a rotary joint, one pair of lever arms being kinematically connected to one welding table (15) and the other lever arms to the other welding table (16) so that the welding tables (15, 16) move towards each other during a rotary movement of the twin-arm levers (25, 26) In one direction (arrow B) and are moved away from each other In the other direction (arrow B).

2. Welding device according to claim 1 **characterized in that** the twin-arm levers (25, 26) are supported transversely to the directions of movement (arrows A) of the welding tables (15, 16).

3. Welding device according to claim 2 **characterized In that** the hinges (19, 20) of the twin-arm levers (25, 26) lie in a plane which extends transversely to the directions of movement (arrows A) of the welding tables (15, 16).

4. Welding device according to one of claims 1 to 3 **characterized In that** the twin-arm levers (25, 26) are arranged at the same height relative to the plane of movement of the welding tables (15, 16).

5. Welding device according to one of claims 1 to 4 **characterized In that** two twin-arm levers (25, 26) are provided.

6. Welding device according to claim 5 **characterized in that** the twin-arm levers (25, 26) are supported In the area of the side edges of the welding tables (15, 16).

7. Welding device according to one of claims 1 to 6 **characterized in that** the twin-arm levers (25, 26) have control points (27, 28, 29, 30) which lie in a single plane with the hinge (19, 20) concerned.

8. Welding device according to one of cialms 1 to 7 **characterized in that** the twin-arm levers (25, 26) have control points (27, 28, 29, 30), which have the same clearance from the hinge (19, 20) concerned.

9. Welding device according to one of claims 1 to 8 **characterized in that** the lever arms are each connected to one of the welding tables (15, 16) by means of an actuating rod (31, 32, 33, 34).

10. Welding device according to claim 9 **characterized in that** the actuating rods (31, 32, 33, 34) are of equal length.

11. Welding device according to claim 9 or 10 **characterized in that** the actuating rods (31, 32 or 33, 34) engaging with a twin-arm lever (25, 26) run parallel to one another.

12. Welding device according to claim 11 **characterized In that** all the actuating rods (31, 32, 33, 34) run parallel to one another,

13. Welding device according to one of claims 1 to 12 **characterized in that** in each case a twin-arm lever (25, 26) and its kinematic connection to the we I-ding tables (15, 16) form a linkage unit and all the linkage units are of identical design and Identical or mirror-image arrangement.

14. Welding device according to one of claims 1 to 13 **characterized In** th at the twin-arm levers (25, 26) have hinges (19, 20), which extend perpendicularly to the plane of movement of the welding tables (15, 16).

15. Welding device according to one of claims 1 to 13 **characterized in that** the twin-arm levers (25, 26) have hinges, which run parallel or coaxially to each other.

16. Welding device according to one of claims 1 to 15 **characterized in that** the twin-arm levers (25, 26) are mechanically synchronised by means of a co u-pling linkage (40, 41, 46, 47).

17. Welding device according to claim 16 **characterized In that** the coupling link a. ge (40, 41, 46, 47) Is In the form of a parallelogram linkage.

18. Welding device according to claim 17 **characterized in that** the parallelogram linkage consists of pivoting levers on the hinges (19, 20) of the twin-arm levers (25, 26) and two coupling rods (46, 47) connecting the pivoting levers (40, 41).

19. Welding device according to claim 18 **characterized In that** the pivoting levers (40, 41) have two lever arms.

20. Welding device according to claim 19 **characterized in that** the two lever arms on each pivoting lever (40, 41) are at an angle of 180° to each other.

21. Welding device according to one of claims 1 to 20 **characterized in that** the twin-arm lovers (25, 26) are mechanically synchronised by means of at least one rotating shaft.

22. Welding device according to claim 21 **characterized In that** the twin-arm levers (25, 26) sit on the rotating shaft.

23. Welding device according to one of claims 1 to 22 **characterized in that** the drive motor (48) Is a linear operating machine.

24. Welding device according to claim 23 **characterized in that** the drive motor is In the form of a hydraulic or pneumatic cylinder unit (48).

25. Welding device according to at least claim 18 **characterized In that** the drive motor (48) Is coupled with two contrarotating movable parts (46, 47) of the coupling linkage.

26. Welding device according to at least claims 18 and 25 **characterized in that** the drive motor (48) is connected to the coupling rods (46, 47).

27. Welding device according to one of claims 1 to 26 **characterized in that** the welding tables (15, 16) are supported on linear guide elements (17, 18).

## Revendications

1. Dispositif de soudage (1) pour le soudage de pièces en matière plastique, comportant un bâti de base (2) dans lequel ou sur lequel deux tables de soudage (15, 16) sont disposées l'une à côté de l'autre, sur lesquelles les pièces en matière plastique peuvent être fixées et qui sont montées de manière déplaçable, un dispositif d'entraînement étant prévu pour le déplacement des tables de soudage (15, 16) dans des directions de déplacement opposées, ledit dispositif comportant un moteur d'entraînement (48) et une tringlerie d'entraînement transmettant la force d'entraînement du moteur d'entraînement (48) aux tables de soudage (15, 16), **caractérisé en ce que** la tringlerie d'entraînement comporte, transversalement aux directions de déplacement (flèches A) des tables de soudage (15, 16), des leviers à deux bras (25, 26) ayant chacun deux bras de levier qui sont montés avec capacité de rotation chacun sur un axe de rotation (19, 20) et sont solidaires en rotation mécaniquement l'un avec l'autre, l'un de chacun des deux bras de levier étant relié einématiquement à une table de soudage (15) et l'autre des deux bras de levier étant relié cinématiquement à l'autre table de soudage (16), de telle manière que, lors d'un mouvement de rotation des leviers à deux bras (25, 26), les tables de soudage (15, 16) soient déplacées l'une vers l'autre dans une direction de rotation (flèche B) et soient éloignées l'une de l'autre dans l'autre direction de rotation (flèche B).

2. Dispositif de soudage selon la revendication 1, **caractérisé en ce que** les leviers à deux bras (25, 26) sont montés transversalement aux directions de déplacement (flèches A) des tables de soudage (15, 16).

3. Dispositif de soudage selon la revendication 2, **caractérisé en ce que** les axes de rotation (19, 20) des leviers à deux bras (25, 26) sont situés dans un plan qui s'étend transversalement aux directions de déplacement (flèches A) des tables de soudage (15, 16).

4. Dispositif de soudage selon l'une quelconque des revendications 1 à 3, **caractérisé en ce que** les leviers à deux bras (25, 26) sont disposés à la même hauteur par rapport au plan de déplacement des tables de soudage (15, 16).

5. Dispositif de soudage selon l'une quelconque des revendications 1 à 4, **caractérisé en ce que** deux leviers à deux bras (25, 26) sont prévus.

6. Dispositif de soudage selon la revendication 5, **caractérisé en ce que** les leviers à deux bras (25, 26) sont montés ou disposés dans la zone des bords latéraux des tables de soudage (15, 16).

7. Dispositif de soudage selon l'une quelconque des revendications 1 à 6, **caractérisé en ce que** les leviers à deux bras (25, 26) comportent des points d'articulation (27, 28, 29, 30) qui sont situés dans un plan avec l'axe de rotation correspondant (19, 20).

8. Dispositif de soudage selon l'une quelconque des revendications 1 à 7, **caractérisé en ce que** les leviers à deux bras (25, 26) comportent des points d'articulation (27, 28, 29, 30) qui ont le même écart par rapport à l'axe de rotation correspondant (19, 20).

9. Dispositif de soudage selon l'une quelconque des revendications 1 à 8, **caractérisé en ce que** les bras de levier sont chacun reliés chacun à l'une des tables de soudage (15, 16) par l'intermédiaire d'une tige de commande (31, 32, 33, 34).

10. Dispositif de soudage selon la revendication 9, **caractérisé en ce que** les tiges de commande (31, 32, 33, 34) sont réalisées de même longueur.

11. Dispositif de soudage selon la revendication 9 ou 10, **caractérisé en ce que** les tiges de commande (31, 32 ou 33, 34) fixées à ou en prise avec un levier à deux bras (25, 26) s'étendent parallèlement entre elles.

12. Dispositif de soudage selon la revendication 11, **caractérisé en ce que** toutes les tiges de commande (31, 32, 33, 34) s'étendent parallèlement entre elles.

13. Dispositif de soudage selon l'une quelconque des revendications 1 à 12, **caractérisé en ce qu'**un levier à deux bras (25, 26) et sa liaison cinétique aux tables de soudage (15, 16) forment une unité de tringlerie et que toutes les unités de tringlerie sont réalisées de manière identique et disposées de manière identique ou symétrique.

14. Dispositif de soudage selon l'une quelconque des revendications 1 à 13, **caractérisé en ce que** les leviers à deux bras (25, 26) ont des axes de rotation (19, 20) qui s'étendent perpendiculairement au plan de déplacement des tables de soudage (15, 16).

15. Dispositif de soudage selon l'une quelconque des revendications 1 à 13, **caractérisé en ce que** les leviers à deux bras (25, 26) ont des axes de rotation qui s'étendent parallèlement ou coaxialement entre eux.

16. Dispositif de soudage selon l'une quelconque des revendications 1 à 15, **caractérisé en ce que** les leviers à deux bras (25, 26) sont synchronisés mécaniquement par l'intermédiaire d'une tringlerie d'accouplement (40, 41, 46, 47).

17. Dispositif de soudage selon la revendication 16, **caractérisé en ce que** la tringlerie d'accouplement (40, 41, 46, 47) est conçue comme une tringlerie en parallélogramme.

18. Dispositif de soudage selon la revendication 17, **caractérisé en ce que** la tringlerie en parallélogramme est composée de leviers de pivotement sur les axes de rotation (19, 20) des leviers à deux bras (25, 26) et de deux tiges d'accouplement (46, 47) reliant les leviers de pivotement (40, 41).

19. Dispositif de soudage selon la revendication 18, **caractérisé** on ce que les leviers de pivotement (40,41) comportent deux bras de levier.

20. Dispositif selon la revendication 19, **caractérisé en ce que** les deux bras de levier de chaque levier de pivotement (40, 41) forment un angle de 180° l'un avec l'autre.

21. Dispositif de soudage selon l'une quelconque des revendications 1 à 20, **caractérisé en ce que** les leviers à deux bras (25, 26) sont synchronisés mécaniquement par l'intermédiaire d'au moins un arbre de rotation.

22. Dispositif de soudage selon la revendication 21, **caractérisé en ce que** les leviers à deux bras (25, 26) sont situés sur l'arbre de rotation.

23. Dispositif de soudage selon l'une quelconque des revendications 1 à 22, **caractérisé en ce que** le moteur d'entraînement (48) est réalisé à fonctionnement linéaire.

24. Dispositif de soudage selon la revendication 23, **caractérisé en ce que** le moteur d'entraînement est conçu comme une unité à vérin hydraulique ou pneumatique (48).

25. Dispositif de soudage selon au moins la revendication 18, **caractérisé en ce que** le moteur d'entraînement (48) est accouplé à deux parties mobiles en sens contraire (46, 47) de la tringlerie d'accouplement.

26. Dispositif de soudage selon au moins les revendications 18 et 25, **caractérisé en ce que** le moteur d'entraînement (48) est relié aux tiges d'accouplement (46, 47).

27. Dispositif de soudage selon l'une quelconque des revendications 1 à 26, **caractérisé en ce que** les tables de soudage (15, 16) sont montées ou disposées sur des éléments de guidage linéaire (17, 18).
